# EUROPÄISCHE PATENTSCHRIFT

(11) **EP 0 571 868 B1**
(45) Veröffentlichungstag und Bekanntmachung des Hinweises auf die Patenterteilung: **20.08.1997**
(21) Anmeldenummer: 93108042.8
(22) Anmeldetag: 17.05.1993
(51) Int. Cl.: B65D 90/04

(54) **Verwendung einer elektrisch leitfähigen Polyurethan-Folie zur Herstellung von flexiblen Einlagen für Behälter zur Lagerung brennbarer Flüssigkeiten**
Application of a electrically conductive polyurethane foil for making flexible linings in thanks for the storage of inflammable liquids
Utilisation d'une feuille en polyuréthane électro-conductrice pour la fabrication d'insertions flexibles pour réservoirs destinés à l'entreposage de liquides inflammables

(30) Priorität: 29.05.1992 DE 4217717
(43) Veröffentlichungstag der Anmeldung: 01.12.1993
(73) Patentinhaber: Wolff Walsrode Aktiengesellschaft, D-29655 Walsrode (DE)
(72) Erfinder: Hargarter, Nicole, Dipl.-Ing., W-3043 Schneverdingen (DE); Funk, Hans-Werner, W-3036 Bomlitz (DE); Stenbeck, Wolfgang, Dipl.-Ing., W-3036 Bomlitz (DE)
(74) Vertreter: Braun, Rolf, Dr.

(56) Entgegenhaltungen:
- EP-A- 0 129 193
- DE-U- 1 822 483
- US-A- 3 811 460

## Beschreibung

Lagerbehälter mit Innenbeschichtung, zweiter Wand oder Leckschutzauskleidung werden in großem Umfang zum Schutz von Wasser und Erdreich gegen die Verschmutzung durch Mineralöl oder Mineralölprodukte eingesetzt.

So gibt die DE-GM 9 109 544 eine umfassende Übersicht über die in der Patentliteratur genannten Ausführungen von Tanksystemen (dort Verweis auf DE-OS 2 904 578, EP-B 0 014 491, DE-OS 2 620 225, CH-PS 653 643, DE-GM 1 822 483).

Anforderungen an eine Innenbeschichtung werden in der TRbF 401 "Richtlinie für Innenbeschichtungen von Behältern zur Lagerung brennbarer Flüssigkeiten der Gruppe A Gefahrklasse I, II und der Gruppe B'' beschrieben (Carl Heymanns Verlag KG, Luxemburger Str. 449, 5000 Köln 41). Dort wird auch erwähnt, daß die Beschichtung nicht zu Zündgefahren durch elektrostatische Aufladung führen und daher der Durchgangs- bzw. Erdableitwiderstand 10⁸ Ohm nicht überschreiten darf.

Die Gefahren durch Entladung statischer Elektrizität und Schutzmaßnahmen dagegen werden in der Richtlinie Nr. 4 der Chemischen Industrie (ZH 1/200) erläutert. Demnach sind bei festen Stoffen, deren Oberflächenwiderstand - gemessen im Normalklima 23/50 - kleiner oder gleich 10⁹ Ohm ist, gefährliche Aufladungen nicht zu erwarten.

Zur Soforterkennung von Undichtigkeiten der Wandungen von Behältern, in denen wassergefährdende Flüssigkeiten gelagert werden, hat sich das Vorsehen eines Leckanzeigegerätes bewährt, das sowohl unterhalb als auch oberhalb des Flüssigkeitsspiegels des Lagergutes ein Leck selbsttätig anzeigt (TrbF 501 "Richtlinie/Bau- und Prüfgrundsätze für Leckanzeigegeräte für Behälter", Carl Heymanns Verlag KG, Luxemburger Str. 449, 5000 Köln 41).

Unter dem Begriff Leckanzeigegerät sind alle für die Leckerkennung an Behältern erforderlichen Anlagenteile zusammengefaßt, wie Überwachungsräume von Doppelwandsystemen, Leckschutzauskleidungen, Leckanzeiger und Leckanzeigemedien.

Lecks werden prinzipiell auf die folgende Weise detektiert:
Zwischen den Wänden eines doppelwandigen Behälters oder der Wand eines einwandigen Behälters und einer Einlage (Teil einer Leckschutzauskleidung) wird ein Zwischenraum erzeugt, der sogenannte Überwachungsraum, welcher der Aufnahme des Leckanzeigemediums - Flüssigkeit, Luftüber- oder -unterdruck - dient.

Bei Undichtigkeit des Behälters läuft die Leckanzeigeflüssigkeit aus bzw. der Druck im Überwachungsraum ändert sich, und es wird ein Alarmsignal ausgelöst.

Nachteile eines Lagerbehälters mit einer Hauptwandung zur Aufnahme mechanischer Kräfte, auf die direkt festhaftend eine Beschichtung aufgebracht wird, sind:
1. Eine kontinuierliche Dichtheitskontrolle unter Verwendung eines Leckanzeigegerätes ist nicht durchführbar.
2. Die Beschichtungsmasse, in der Regel ein aushärtender Kunststoff, vorzugsweise ungesättigtes Polyesterharz, muß nachträglich appliziert werden, wobei sich eine einheitliche Auftragsschichtdicke nur sehr schwer erreichen läßt. Variable Auftragsdicken verursachen jedoch eine ungleichmäßige Ableitung der elektrostatischen Aufladung von der inneren Oberfläche der Beschichtung, da die unter der Deckschicht angebrachten Ableitungswege (Pulver oder Netz aus elektrisch leitfähigem Material) unterschiedliche Abstände zur inneren Oberfläche aufweisen.

Das DE-GM 1 822 483 und DE-GM 9 109 544 betreffen einwandige Behälter mit Leckschutzauskleidung, wobei jeweils Teil dieser Auskleidung eine flexible Einlage ist. Bei Lagerbehältern diesen Typs kann eine ständige Dichtheitskontrolle prinzipiell gewährleistet werden.

DE-GM 1 822 483 beschreibt eine flexible Einlage aus vollsynthetischem Gewebe, das zum Tankinneren hin mit Polyesterurethan beschichtet ist, wobei die Beschichtungsmasse vorzugsweise leitfähige Stoffe, z.B. Ruß, enthält. Elektrostatische Aufladungen können also sicher nur auf der Innenseite der flexiblen Einlage abgeleitet werden.

Nach DE-GM 9 109 544 wird zwischen einer flexiblen Einlage aus elektrisch nicht leitfähigem Material und der Außenwandung eine in einzelne Sektionen unterteilte Schicht aus elektrisch leitendem Matrial angebracht. Dadurch kann die Ableitung elektrostatischer Aufladung von der zur Tankaußenseite liegenden Einlagenoberfläche sektionsweise überprüft werden. Eine Ableitung der elektrostatischen Aufladung auf der Einlageninnenseite ist jedoch nicht vorgesehen.

Als Rohstoffbasis für flexible Einlagen werden insbesondere Kunststoffe eingesetzt. So legt die TRbF 501 (Bezugsquelle s.o.) explizit die Baugrundsätze für Einlagen aus unverstärkten PVC-weich-Bahnen feste Die Beständigkeit von Weich-PVC gegen organische Lösungsmittel und Mineralölprodukte ist allerdings unbefriedigend.

Thermoplastische Polyurethan-Elastomere (TPU) zeichnen sich dagegen durch die Kombination von guter Zug- und Weiterreißfestigkeit, hoher Dehnfähigkeit und guter Kälteflexibilität mit chemischer Beständigkeit aus. TPU sind seit langem bekannt und enthalten im wesentlichen drei Basiskomponenten: Diisocyanat, kurzkettiges Polyol - auch Kettenverlängerer genannt - und langkettiges Polyol. Die breite Palette an Rohstoffen für jede dieser Komponenten begründet die große Variationsbreite der TPU-Chemie und damit auch der Polyurethaneigenschaften.

Eine Übersicht über chemischen Aufbau, Herstellung, Eigenschaften und Anwendungen von TPU liefert z.B. Kunststoffe 68 (1978) 12, S. 819 bis 825 und Polyurethane Elastomers von C. Hepburn, Applied Science Publisher Ltd., Barking Essex, England, 1982.

Die bekanntesten Herstellungsverfahren für TPU, das sogenannte Bandverfahren und das Extruderverfahren, werden in EP-B 0 129 193 erläutert.

TPU gleicher Zusammensetzung sind nach dem Extruderverfahren transparent, während sie nach dem Bandverfahren ein opakes Aussehen und eine höhere Schmelzeviskosität aufweisen.

TPU können weiterhin - wie auf dem Kunststoffsektor allgemein üblich - durch Zusatzstoffe modifiziert werden. Zum Einsatz kommen u.a. Hydrolyse-, Hitze- und UV-Stabilisatoren, Gleit- und Schmierstoffe, Farbpigmente, Biozide und anorganische Füllstoffe, wie z.B. Kieselsäure, wobei letztere in Folien auch als Abstandshalter wirken.

Ein verbessertes antistatisches Verhalten kann durch den Zusatz von antistatischen Weichmachern oder von speziellen Rußen erreicht werden.

Die Verwendung von Leitfähigkeitsrußen in Kunststoffmassen wird allgemein in "Use of the electroconductive carbon Ketjenblack" Research Disclosure Nr. 136, Aug. 1975, S. 26, Akzo Chemie und in Papier + Technik-Verarbeiter 2 (1991), S. 18 beschrieben.

EP-B 0 129 193 betrifft insbesondere ein Verfahren zur Herstellung von antistatischen und/oder leitfähigen TPU, die nach dem Bandverfahren hergestellt werden sowie deren Verwendung.

Nachteilig für die Folienextrusion wirkt sich das besondere Aufschmelzverhalten der nach dem Bandverfahren hergestellten TPU aus, welches für die Produktion von opaken Folien bei wirtschaftlicher Fahrweise, d.h. hohem Materialdurchsatz, speziell gestaltete Düsen und Schnecken mit einer Dekompressionszone erfordert.

Vorzuziehen wäre ein elektrisch leitfähig ausgerüstetes TPU, welches sich auf einer der üblicherweise für die Extrusion von TPU empfohlenen Dreizonenschnecken verarbeiten läßt.

Die Aufgabe der vorliegenden Erfindung bestand darin, eine flexible Einlage für einen Behälter für brennbare Flüssigkeiten zur Verfügung zu stellen, die neben der Möglichkeit zur kontinuierlichen Dichtheitskontrolle des Behälters auch die größtmögliche Sicherheit gegen Gefahren durch elektrostatische Aufladung bot.

Diese Aufgabe konnte überraschenderweise durch Bereitstellung einer mit einem speziellen Leitfähigkeitsruß ausgerüsteten Folie aus thermoplastischem Polyurethan-Elastomer gelöst werden.

Gegenstand der Erfindung ist somit die Verwendung einer mindestens einschichtigen, elektrisch leitfähig ausgerüsteten TPU-Folie als flexible Einlage für Behälter zur Lagerung brennbarer Flüssigkeiten, wobei die Folie mindestens enthält:
1. TPU, auch Blends aus verschiedenen TPU-Typen,
2. Ruß, der
   a) eine Oberfläche nach der BET-Methode von größer oder gleich 600 m²/g, vorzugsweise von 800 bis 1200 m²/g (ASTM D-3037), und vorzugsweise
   b) eine durchschnittliche Teilchengröße von weniger als 500 nm, vorzugsweise von 20 bis 50 nm,
   besitzt, und gegebenenfalls
3. die für die TPU- und Folienherstellung bekannten Zusatzstoffe.

Geeignete Aufbaukomponenten für den Basisrohstoff der Folie-TPU- werden in EP-B 0 129 193 detailliert beschrieben, sind aber auch der einschlägigen Polyurethan-Literatur zu entnehmen (z.B. Polyurethane Elastomers von C. Hepburn, Verlag s.o.). Vorzugsweise werden PU-Ester eingesetzt. Insbesondere ist aber auch die Herstellung eines Blends aus TPU-Typen unterschiedlicher Härte oder Polyol-Komponente, z.B. PU-Ester/PU-Ether denkbar.

Bevorzugt finden TPU, die nach dem Extruderverfahren hergestellt wurden, Verwendung. Es eignen sich grundsätzlich aber auch TPU nach dem Bandverfahren als Basisrohstoff für die Fertigung einer Folie, die der erfindungsgemäßen Verwendung dient.

TPU nach dem Extruderverfahren sind leichtfließender, erleichtern somit die Einarbeitung von hohen Rußkonzentrationen und erfordern keine spezielle Gestaltung von Düse oder Schnecke.

Ruße, die die erfindungsgemäß erforderlichen Merkmale erfüllen, werden beispielsweise unter dem Warenzeichen Printex XE2 der Degussa und Ketjenblack EC der Akzo Chemie vermarktet.

Die elektrische Leitfähigkeit des TPU erhöht sich mit zunehmender Rußkonzentration, während der elektrische Widerstand entsprechend abfällt. Der erfindungsgemäß geeignete Ruß wird beispielsweise in solchen Mengen eingesetzt, daß die elektrisch leitfähigen TPU 5 bis 20 Gew.-%, vorzugsweise 7 bis 15 Gew.-% Ruß, bezogen auf das Gesamtgewicht, enthalten.

Die Einarbeitung des Rußes in das zuvor in den plastischen Zustand überführte TPU erfolgt mit Hilfe von üblichen aus der Kautschuk- und Kunststoffindustrie bekannten Vorrichtungen, beispielsweise Knetern oder Extrudern, wobei Doppelwellenextruder vorzugsweise Anwendung finden.

Neben dem Ruß können in das TPU während desselben Verfahrensschrittes auch Zusatzstoffe in üblichen Mengen eingearbeitet werden. Die Zugabe kann allerdings auch in Form von Additivbatchen bei der Folienextrusion erfolgen. Als übliche Zusatzstoffe seien beispielsweise Gleitmittel, Antiblockmittel, Inhibitoren, Stabilisatoren gegen Hydrolyse, Licht oder Hitze, Flammschutzmittel, Farbstoffe, Pigmente und anorganische und/oder organische Füllstoffe genannt.

Nähere Angaben über die obengenannten Zusatzstoffe sind der Fachliteratur, beispielsweise "High Polymers", Band XVI, Polyurethane, Teil 1 und 2, von J.H. Saunders und K.C. Frisch, Interscience Publishers, New York, 1962 bzw. 1964 oder dem "Kunststoff-Taschenbuch" von Hansjürgen Saechting, Hanser, München, Wien, 1989, S. 53 bis 61, zu entnehmen.

Das leitfähige TPU kann, gegebenenfalls unter Zusatz von Additivbatchen, durch Schmelz(co)extrusion zu Folie verarbeitet werden. Geeignete Verfahren sind die Flachfilm-, vorzugsweise aber auch die Blasfilm(co)extrusion.

Die Verarbeitung von TPU durch Extrusion wird in der Fachliteratur, beispielsweise "Kunststoff-Handbuch", Band VII, Polyurethane von Becker und Braun, Hanser, München, Wien, 1983, S. 433 und 434, erläutert.

Die erfindungsgemäße Folie kann ein- oder beidseitig in üblicher Weise vorbehandelt werden, insbesondere mit einer Corona-, Fluor- oder Plasmavorbehandlung.

Die Dicke der einschichtig extrudierten Folie liegt vorzugsweise zwischen 25 µm und 2 mm, wobei Blasfolien bevorzugt das untere und Flachfilme das obere Ende des obengenannten Dickenspektrums abdecken. So beträgt die Dicke einer Blasfolie aus dem leitfähig ausgerüstetem TPU vorzugsweise 25 bis 800 µm und die eines Flachfilms vorzugsweise 0,5 bis 2 mm.

Die Herstellung einer Mehrschichtfolie für die erfindungsgemäße Verwendung, die mindestens eine Schicht aus dem erfindungsgemäßen leitfähigen TPU aufweist, ist ebenfalls möglich. Dies kann nach üblichen Verfahren wie Laminierung, Beschichtung oder Coextrusion erfolgen.

Innerhalb eines mehrschichtigen Folienaufbaus beträgt die Dicke einer einzelnen leitfähig ausgerüsteten TPU-Schicht beispielsweise 10 µm bis 2 mm, vorzugsweise 10 µm bis 800 µm.

### Beispiele 1 bis 4, (Vergleichsbeispiel)

### Beispiel 1

Ein leitfähig ausgerüstetes TPU-Compound auf Basis eines PU-Esters, der nach dem Extruderverfahren hergestellt wurde, eine Härte von Shore A 88 und einen MFI (melt flow index) von 20 g/10 min, gemessen bei 190°C und einem Auflagegewicht von 8,7 kg besaß und in das 9 Gew.-%, bezogen auf das Gesamtgewicht, eines Leitfähigkeitsrußes vom Typ Printex® XE2 der Degussa mit einer Oberfläche nach der BET-Methode von 900 m²/g und einer mittleren Teilchengröße von 30 nm sowie ein Wachs in üblicher Menge zur Unterstützung der Trennbarkeit der Folie eingearbeitet worden waren, wurde zu einer einschichtigen Blasfolie extrudiert.

Dafür wurde ein Einschneckenextruder mit einem Durchmesser von 45 mm und einer Länge von 25 D unter Verwendung einer üblichen Dreizonenschnecke mit einer Kompression von 1:2,57 und ein Einschicht-Schlauchfolzenwerkzeug eingesetzt. Das Temperaturprogramm lag zwischen 165 und 185°C. Das leitfähige TPU-Compound der oben beschriebenen Zusammensetzung wurde unter diesen Bedingungen problemlos zu Folie geblasen, deren Dicke 550 µm bei den in der Folienindustrie üblichen Dickentoleranzen von ± 10 % betrug.

Nach DIN 53 482 wurde der Oberflächenwiderstand R_{OA} zu 2,1 · 10³ Ohm bzw. 3,7 · 10³ Ohm (Schlauchinnen- bzw. -außenseite), der Durchgangswiderstand R_{D} zu 3,2 · 10³ Ohm ermittelt. Die Reißfestigkeit nach DIN 53 455 betrug in Längsrichtung 46 MPa, in Querrichtung 41 MPa.

### Beispiel 2

Ein leitfähig ausgerüstetes TPU-Compound auf Basis eines PU-Ethers, der nach dem Extruderverfahren hergestellt wurde, eine Härte von Shore A 85 und einen MFI (melt flow index) von 15 g/10 min, gemessen bei 190°C und einem Auflagegewicht von 8,7 kg besaß und in das 7 Gew.-%, bezogen auf das Gesamtgewicht, eines Leitfähigkeitsrußes vom Typ Printex® XE2 der Degussa (siehe auch Beispiel 1) sowie ein Wachs in üblicher Menge zur Unterstützung der Trennbarkeit der Folie eingearbeitet worden waren, wurde zu einer einschichtigen Blasfolie extrudiert.

Dafür wurde der in Beispiel 1 angeführte Extrusionsanlagenaufbau und das dort erwähnte Temperaturprogramm gewählt.

Auch dieses leitfähige TPU wurde ohne Probleme zu 350 µm starker Folie innerhalb der ±10 %-Dickentoleranzgrenzen geblasen.

Nach DIN 53 482 wurde der Oberflächenwiderstand R_{OA} zu 1,0 · 10⁴ Ohm bzw. 4,5 · 10⁴ Ohm (Schlauchinnen- bzw. -außenseite), der Durchgangswiderstand R_{D} zu 3,1 · 10⁴ Ohm ermittelt. Die Reißfestigkeit nach DIN 53 455 betrug in Längsrichtung 40 MPa, in Querrichtung 37 MPa.

### Beispiel 3

Ein leitfähig ausgerüstetes TPU-Compound auf Basis eines PU-Esters, der nach dem Extruderverfahren hergestellt wurde, eine Härte von Shore A 86 und einen MFI (melt flow index) von 22,0 g/10 min bei 200°C und einem Auflagegewicht von 10 kg besaß und in das 7 Gew.-%, bezogen auf das Gesamtgewicht, des in Beispiel 1 beschriebenen Leitfähigkeitsrußes sowie ein Wachs in üblicher Menge zur Unterstützung der Trennbarkeit der Folie eingearbeitet worden waren, wurde zu einer einschichtigen Blasfolie extrudiert.

Dafür wurde der in Beispiel 1 angeführte Extrusionsanlagenaufbau gewählt. Das Temperaturprogramm betrug abweichend von den Beispielen 1 und 2 170 bis 190°C.

Dieses leitfähige TPU wurde ebenfalls ohne Probleme zu 450 µm starker Folie mit Dickenabweichungen innerhalb der ± 10 %-Grenzen geblasen.

Nach DIN 53 482 wurde der Oberflächenwiderstand R_{OA} zu 6,5 · 10³ Ohm bzw. 1,2 · 10⁴ Ohm (Schlauchinnen- bzw. -außensite) und der Durchgangswidrstand R_{D} zu 2,5 · 10⁴ Ohm ermittelt. Die Reißfestigkeit nach DIN 53 455 betrug in Längsrichtung 45 MPa, in Querrichtung 40 MPa.

### Beispiel 4

Verfuhr man analog den Angaben zu Beispiel 1, setzte jedoch dem dort beschriebenen leitfähigen TPU-Compound 2 Gew.-% bezogen auf das Gesamtgewicht, eines Antiblockbatches auf Basis TPU mit Kieselsäure als Abstandshalter und Amidwachs als Trennmittel zu, so wurden dadurch die mechanischen und elektrischen Eigenschaften der derartig zusammengesetzten Folie nicht beeinflußt, aber ihre Trennbarkeit verbessert.

### Vergleichsbeispiel

Die in Beispiel 1 beschriebene PU-Ester-Type wurde unter Zugabe von 2 Gew.-%, bezogen auf das Gesamtgewicht, des auch in Beispiel 4 verwendeten Antiblockbatches analog den Angaben zu Beispiel 1 zu 500 µm starker Folie mit Dickentoleranzen innerhalb der ±10 %- Grenzen extrudiert.

Nach DIN 53 482 betrug der Oberflächenwiderstand R_{OA} 1,5 · 10¹¹ Ohm und der Durchgangswiderstand R_{D} 1,2 · 10¹¹ Ohm. Die Reißfestigkeit nach DIN 53 455 betrug in Längsrichtung 68 MPa, in Querrichtung 71 MPa.

### Bewertung der Ergebnisse

Die nach den Beispielen 1 bis 4 hergestellten, erfindungsgemäßen Folien weisen Durchgangs- und Oberflächenwiderstände von deutlich unter 10⁸ Ohm bzw. 10⁹ Ohm auf und bieten damit bei der erfindungsgemäßen Verwendung als flexible Einlage für Behälter zur Lagerung brennbarer Flüssigkeiten hohe Sicherheit gegen Zündgefahren durch elektrostatische Aufladung.

Durch die leitfähige Ausrüstung mit Ruß wird die Reißfestigkeit der TPU-Folien gemäß der Beispiele 1 bis 4 gegenüber der TPU-Folie aus dem Vergleichsbeispiel (keine leitfähige Ausrüstung) von ungefähr 70 MPa auf 40 MPa reduziert. Sie liegt damit aber immer noch beachtlich über der Anforderung von ≥ 15 MPa gemäß TrbF 501, die für die Reißfestigkeit von unverstärkten PVC-weich-Bahnen festgelegt wurde.

Auch von ihren mechanischen Eigenschaften her ist die erfindungsgemäße Folie daher gut als flexible Einlage geeignet.

## Patentansprüche

1. Verwendung einer mindestens einschichtigen, elektrisch leitfähigen Folie aus thermoplastischem Polyurethan-Elastomer (TPU) als flexible Einlage für Behälter zur Lagerung brennbarer Flüssigkeiten, wobei die Folie mindestens
A. TPU als Basisrohstoff
B. Ruß mit einer Oberfläche nach der BET-Methode von größer oder gleich 600 m²/g und
C. gegebenenfalls die für die TPU- und Folienherstellung bekannten Zusatzstoffe
enthält.

2. Verwendung einer mindestens einschichtigen, elektrisch leitfähigen TPU-Folie nach Anspruch 1, dadurch gekennzeichnet, daß als Rohstoffbasis ein Blend aus TPU eingesetzt wird.

3. Verwendung einer mindestens einschichtigen, elektrisch leitfähigen TPU-Folie nach wenigstens einem der vorhergehenden Ansprüche, dadurch gekennzeichnet, daß wenigstens eines der eingesetzten TPU nach dem Extruderverfahren hergestellt wurde.

4. Verwendung einer mindestens einschichtigen, elektrisch leitfähigen TPU-Folie nach wenigstens einem der vorhergehenden Ansprüche, dadurch gekennzeichnet, daß der Rußanteil 5 bis 20 Gew.-%, bezogen auf das Gesamtgewicht, beträgt.

5. Verwendung einer mindestens einschichtigen, elektrisch leitfähigen TPU-Folie nach Wenigstens einem der vorhergehenden Ansprüche, dadurch gekennzeichnet, daß die Folie einer Corona-, Fluor- oder Plasmavorbehandlung unterzogen ist.

6. Verwendung einer mindestens einschichtigen, elektrisch leitfähigen TPU-Folie nach wenigstens einem der vorhergehenden Ansprüche, dadurch gekennzeichnet, daß die Dicke der TPU-Folie 25 µm bis 2 mm beträgt.

7. Verwendung einer Mehrschichtfolie als flexible Einlage für Behälter zur Lagerung brennbarer Flüssigkeiten, dadurch gekennzeichnet, daß mindestens eine ihrer Schichten von der elektrisch leitfähigen TPU-Folie nach wenigstens einem der vorangehenden Ansprüche gebildet wird.

## Claims

1. The use of an electrically conductive film of thermoplastic polyurethane elastomer (TPU) consisting of at least one layer as flexible lining for containers for the storage of inflammable liquids, wherein the film comprises at least
A. TPU as basic raw material
B. carbon black with a surface area in accordance with the BET method greater than or equal to 600 m²/g
C. optionally the additives known for TPU and film production.

2. The use of an electrically conductive TPU film consisting of at least one layer according to Claim 1, characterised in that a blend of TPUs is used as basic raw material.

3. The use of an electrically conductive TPU film consisting of at least one layer according to at least one of the preceding claims, characterised in that at least one of the TPUs used has been produced in accordance with the extruder method.

4. The use of an electrically conductive TPU film consisting of at least one layer according to at least one of the preceding claims, characterised in that the carbon black constituent amounts to 5 to 20 wt.% relative to the total weight.

5. The use of an electrically conductive TPU film consisting of at least one layer according to at least one of the preceding claims, characterised in that the film is subjected to a corona-, fluorine- or plasma preliminary treatment.

6. The use of an electrically conductive TPU film consisting of at least one layer according to at least one of the preceding claims, characterised in that the thickness of the TPU film amounts to 25 µm to 2 mm.

7. The use of a multi-layer film as flexible lining for containers for the storage of inflammable liquids, characterised in that at least one of its layers is formed by the electrically conductive TPU film according to at least one of the preceding claims.

## Revendications

1. Utilisation d'une feuille électroconductrice au moins monocouche d'un élastomère polyuréthane thermoplastique (TPU) comme doublure flexible pour des réservoirs destinés au stockage de liquides inflammables, la feuille contenant au moins
A. un TPU comme matière première de base
B. du noir de carbone ayant une surface, mesurée par la méthode BET, supérieure ou égale à 600 m²/g, et éventuellement
C. les additifs connus pour la préparation de TPU et de feuilles.

2. Utilisation d'une feuille de TPU électroconductrice au moins monocouche selon la revendication 1, caractérisée en ce que l'on utilise comme matière première de base un mélange de TPU.

3. Utilisation d'une feuille de TPU électroconductrice au moins monocouche selon l'une au moins des revendications précédentes, caractérisée en ce qu'au moins l'un des TPU utilisés a été obtenu par le procédé d'extrusion.

4. Utilisation d'une feuille de TPU électroconductrice au moins monocouche selon l'une au moins des revendications précédentes, caractérisée en ce que la faction de noir de carbone représente 5 à 20 % en masse par rapport à la masse totale.

5. Utilisation d'une feuille de TPU électroconductrice au moins monocouche selon l'une au moins des revendications précédentes, caractérisée en ce que l'on soumet la feuille à un traitement préalable par décharge à effet couronne ou à un traitement préalable au fluor ou au plasma.

6. Utilisation d'une feuille de TPU électroconductrice au moins monocouche selon l'une au moins des revendications précédentes, caractérisée en ce que l'épaisseur de la feuille de TPU est comprise entre 25 µm et 2 mm.

7. Utilisation d'une feuille multicouche comme doublure flexible pour des réservoirs destinés au stockage de liquides inflammables, caractérisée en ce qu'au moins une de ses couches est formée de la feuille de TPU électroconductrice selon l'une au moins des revendications précédentes.
